# EUROPEAN PATENT APPLICATION

(11) **EP 4 807 589 A1**
(43) Date of publication of application: **16.09.2026**
(21) Application number: 24934356.7
(22) Date of filing: 10.12.2024
(51) Int. Cl.: G06F 18/241

(54) **FINGER PRESSING STATE DETECTION METHOD, AND TRAINING METHOD, ELECTRONIC DEVICE AND MEDIUM**

(30) Priority: 15.08.2024 CN 202411126520
(71) Applicant: SHENZHEN GOODIX TECHNOLOGY CO., LTD., Futian Free Trade Zone, Futian Shenzhen Guangdong 518000 (CN)
(72) Inventor: HU, Huiyi, Shenzhen, Guangdong 518000 (CN); XIAO, Mengija, Shenzhen, Guangdong 518000 (CN); WANG, Bo, Shenzhen, Guangdong 518000 (CN)
(74) Representative: Metida
(86) International application number: PCT/CN2024/138167
(87) International publication number: WO 2026/036588

(57) **Abstract**

The present disclosure relates to the technical field of signal detection, and discloses a finger pressing state detection method, training method, electronic device, and medium, for improving generalization capability of finger pressing state detection. The method partially includes: pre-processing an ultrasonic echo signal to obtain model input data, where the ultrasonic echo signal is a corresponding ultrasonic echo signal after an ultrasonic array emits an ultrasonic signal to a pressing area; and inputting the model input data into a trained neural network model, so that the neural network model outputs a finger pressing state.

## Description

### CROSS REFERENCE TO RELATED APPLICATIONS

The present disclosure claims priority to the Chinese patent application with an application number 202411126520.7 and titled "FINGER PRESSING STATE DETECTION METHOD, TRAINING METHOD, ELECTRONIC DEVICE AND MEDIUM", which is filed with the Patent Office of the People's Republic of China on August 15, 2024, and the entire contents thereof are incorporated in the present disclosure by reference.

### TECHNICAL FIELD

The present disclosure relates to the technical field of signal detection, and especially relates to a finger pressing state detection method, training method, electronic device, and medium.

### BACKGROUND

While using an electronic device that includes a touch function, such as a mobile phone and a computer, a user needs to touch a screen or other touch positions with a finger to carry out operation or recognition. For example: touch unlocking, single-click confirmation, double-click screenshot, etc., and generally, the electronic device captures an action at first, and then triggers the corresponding touch function.

An ultrasonic system may obtain a digital signal through emitting an ultrasonic wave and receiving a reflected sound wave, and via a series of signal conversions, and due to influence of acoustic impedance on sound wave propagation, there are differences in acoustic impedance of different reflection surfaces, and there are also differences in ultrasonic echo intensity. Therefore, there are differences in the ultrasonic echo intensity between the finger and a touch contact surface, and between the air and the touch contact surface, and a finger action of the user may be detected, and a finger pressing state may be judged through the above differences.

In a traditional solution, a finger pressing state (lifting or pressing, etc.) may be detected through a set benchmark threshold value under a condition of keeping the same ultrasonic emission frequency, temperature, etc., however, an ultrasonic signal is influenced by factors such as an emission frequency, a temperature, ultrasonic flight time, and differences in ultrasonic modules, and there are large differences in signal intensity under different conditions, therefore, a large amount of data covering different conditions is needed and a corresponding benchmark threshold value needs to be set for judging the finger pressing state through the threshold value; and there is a certain difficulty in covering all different cases, so that low generalization capability of the traditional detection solution is caused.

### SUMMARY

The present disclosure provides a finger pressing state detection method, training method, electronic device, and medium, for solving a technical problem of low generalization capability in a traditional finger pressing state detection solution.

On the basis of the above technical problem, the following solution is provided:
in a first aspect, a finger pressing state detection method is provided, and includes:
pre-processing an ultrasonic echo signal to obtain model input data, where the ultrasonic echo signal is a corresponding ultrasonic echo signal after an ultrasonic array emits an ultrasonic signal to a pressing area; and
inputting the model input data into a trained neural network model, so that the neural network model outputs a finger pressing state.

In a realization manner, the neural network model includes a neural network model constructed on the basis of a recurrent neural network; or a neural network model constructed on the basis of a convolutional neural network.

In a realization manner:
the neural network model includes a first classification decision layer and a multi-layer recurrent neural network, where output of the multi-layer recurrent neural network is connected with the first classification decision layer;
   or,
the neural network model includes a second classification decision layer and a single-layer recurrent neural network, where output of the single-layer recurrent neural network is connected with the second classification decision layer.

In a realization manner, the pre-processing an ultrasonic echo signal to obtain model input data includes:
carrying out space-domain multi-point sampling on the single-frame ultrasonic echo signal to obtain space-domain sampled data corresponding to the single-frame ultrasonic echo signal;
converting the space-domain sampled data into a first data vector; and
obtaining model input data of the neural network model according to the first data vector.

In a realization manner, the carrying out space-domain multi-point sampling on the single-frame ultrasonic echo signal to obtain space-domain sampled data corresponding to the single-frame ultrasonic echo signal includes:
carrying out space-domain sampling on the single-frame ultrasonic echo signal according to a preset row interval and a preset column interval to obtain space-domain sampled data corresponding to the single-frame ultrasonic echo signal.

In a realization manner, the obtaining model input data of the neural network model according to the first data vector includes:
carrying out normalization processing on the first data vector, where the first data vector subjected to the normalization processing is model input data of the neural network model.

In a realization manner, the pre-processing an ultrasonic echo signal to obtain model input data includes:
converting an echo intensity feature value of the single-frame ultrasonic echo signal acquired at a current time step, and echo intensity feature values respectively corresponding to other time steps into a second data vector, where the other time steps are time steps before the current time step; and
obtaining model input data of the neural network model according to the second data vector.

In a realization manner, the other time steps are the first N-1 continuous time steps of the current time step N.

In a realization manner, the obtaining model input data of the neural network model according to the second data vector includes:
carrying out normalization processing on the second data vector, where the second data vector subjected to the normalization processing is model input data of the neural network model.

In a realization manner, the finger pressing state output by the neural network model includes: a classification determined state or a classification undetermined state, wherein the classification determined state is any one of at least two types of pressing states.

In a realization manner, the at least two types of pressing states include a finger touch state and a finger non-touch state; or, the at least two types of pressing states include a finger touch state, a finger non-touch state, a touch-to-non-touch critical state, and a non-touch-to-touch critical state.

In a realization manner, after the inputting the model input data into a trained neural network model, so that the neural network model outputs a finger pressing state, the method further includes:
when the output finger pressing state is the classification determined state, taking the classification determined state as a final finger pressing state, and correspondingly updating the output classification determined state to a state memory sequence according to a time sequence; and
when the output finger pressing state is the classification undetermined state, taking a pressing state which is finally recorded in the state memory sequence as a final finger pressing state, or taking a pressing state with the highest state probability in the state memory sequence as the finally-output finger pressing state, and correspondingly updating the pressing state to the state memory sequence.

In a second aspect, a neural network model training method is provided, and includes:
obtaining trained sample date, where the trained sample date comprises finger pressing state sample data and a pressing state classification label corresponding to the finger pressing state sample data, the finger pressing state sample data is constructed on the basis of an ultrasonic echo sample signal, and the ultrasonic echo sample signal is an ultrasonic reflected signal after an ultrasonic sample signal is emitted to a pressing area;
training a neural network model on the basis of the trained sample date until a neural network model that meets preset model conditions is obtained; and
using the trained neural network model for outputting a finger pressing state.

In a realization manner, the neural network model includes a neural network model constructed on the basis of a recurrent neural network; or a neural network model constructed on the basis of a convolutional neural network.

In a realization manner:
the neural network model includes a first classification decision layer and a multi-layer recurrent neural network, where output of the multi-layer recurrent neural network is connected with the first classification decision layer;
   or,
the neural network model includes a second classification decision layer and a single-layer recurrent neural network, where output of the single-layer recurrent neural network is connected with the second classification decision layer.

In a realization manner, the finger pressing state sample data includes a first sample data vector; and
the first sample data vector is obtained through converting space-domain sampling sample data, and the space-domain sampling sample data is obtained through carrying out space-domain multi-point sampling on the basis of a single-frame ultrasonic echo sample signal.

In a realization manner, the space-domain sampling sample data is obtained after carrying out space-domain sampling on the single-frame ultrasonic echo sample signal at a preset interval.

In a realization manner, the first sample data vector is a sample data vector subjected to normalization processing.

In a realization manner, the finger pressing state sample data comprises a second sample data vector; and
the second sample data vector is obtained through converting echo intensity feature values respectively corresponding to a plurality of single-frame ultrasonic echo sample signals, and the plurality of single-frame ultrasonic echo sample signals respectively are single-frame ultrasonic echo sample signals corresponding to a plurality of different time steps.

In a realization manner, the plurality of different time steps are continuous time steps.

In a realization manner, the second sample data vector is a sample data vector subjected to normalization processing.

In a realization manner, the finger pressing state output by the neural network model includes: a classification determined state or a classification undetermined state, wherein the classification determined state is any one of at least two types of pressing states.

In a realization manner, the at least two types of pressing states include a finger touch state and a finger non-touch state; or, the at least two types of pressing states include a finger touch state, a finger non-touch state, a touch-to-non-touch critical state, and a non-touch-to-touch critical state.

In a third aspect, a finger pressing state detection apparatus is provided, and includes:
a processing module used for pre-processing an ultrasonic echo signal to obtain model input data, where the ultrasonic echo signal is a corresponding ultrasonic echo signal after an ultrasonic array emits an ultrasonic signal to a pressing area; and
an input module used for inputting the model input data into a trained neural network model, so that the neural network model outputs a finger pressing state.

In a fourth aspect, a neural network model training apparatus is provided, and includes:
an obtaining module used for obtaining trained sample date, where the trained sample date includes finger pressing state sample data and a pressing state classification label corresponding to the finger pressing state sample data, the finger pressing state sample data is constructed on the basis of an ultrasonic echo sample signal, and the ultrasonic echo sample signal is an ultrasonic reflected signal after an ultrasonic sample signal is emitted to a pressing area; and
a training module used for training a neural network model on the basis of the trained sample date until the neural network model that meets preset model conditions is obtained, where the trained neural network model is used for outputting a finger pressing state.

In a fifth aspect, an electronic device is provided, and a finger pressing state detection apparatus includes an ultrasonic piezoelectric sensor, an analog-to-digital converter, a data processing center, and a central controller, where the ultrasonic piezoelectric sensor, the analog-to-digital converter, and the data processing center are all connected with the central controller;
the ultrasonic piezoelectric sensor is used for responding to the central controller to emit an ultrasonic signal to a pressing area, and receiving an ultrasonic echo signal;
the analog-to-digital converter is used for responding to the central controller to carry out digital-to-analog conversion on the ultrasonic echo signal; and
the data processing center responds to the central controller to realize the steps of the finger pressing state detection method described in any one of the above contents.

In a sixth aspect, an electronic device is provided, and includes a memory, a processor, and a computer program stored in the memory and capable of being run in the processor, where when the processor executes the computer program, the steps of the neural network model training method described in any one of the above contents are realized.

In a seventh aspect, a readable storage medium is provided, and stores a computer program, where when the computer program is executed by a processor, the steps of the method described in any one of the above contents are realized.

In an eighth aspect, a computer program product is provided, and includes a computer program, where when the computer program is executed by a processor, the steps of the method described in any one of the above contents are realized.

In one of the solutions realized above, the model input data is obtained through pre-processing the ultrasonic echo signal, and the model input data is input into the trained neural network model, so that the neural network model outputs the corresponding finger pressing state; the corresponding intensity features of the ultrasonic echo signal, of the different finger pressing states are different, the pre-processed ultrasonic echo signal, i.e., the model input data, represents changes in the intensity features, and the trained neural network model outputs the finger pressing state on the basis of the model input data, without a manner of setting a benchmark threshold value to compare, so that differences among different ultrasonic modules (such as differences in ultrasonic piezoelectric sensors adopted by different electronic devices) may be eliminated; and the same network model parameter has higher generalization capability among the different ultrasonic modules, moreover, differences in various different scenes (temperatures, frequencies, etc.) and different finger states may be effectively eliminated, and a plurality of special scenes such as a high temperature, a low temperature and finger wetting may be covered, so that higher generalization capability and accuracy are achieved.

### BRIEF DESCRIPTION OF DRAWINGS

In order to describe the technical solutions of the examples of the present disclosure more clearly, a brief introduction for the drawings required in the descriptions for the examples of the present disclosure will be provided below, apparently, the drawings in the description below show merely some examples of the present disclosure, and those of ordinary skill in the art may also derive other drawings from these drawings without making creative efforts.
FIG. 1 is a schematic diagram of a system framework of a processing system in an example of the present disclosure;
FIG. 2 is a schematic principle diagram of working of a signal emission model and a signal reception model of an ultrasonic array in an example of the present disclosure;
FIG. 3 is a schematic comparison diagram of ultrasonic echo signal intensity in a finger touch state and a finger non-touch state in an example of the present disclosure;
FIG. 4 is a schematic flow diagram of a finger pressing state detection method in an example of the present disclosure;
FIG. 5 is a schematic diagram of a model architecture of a neural network model based on a multi-layer recurrent neural network in an example of the present disclosure;
FIG. 6 is a schematic diagram of a model architecture of a neural network model based on a single-layer recurrent neural network in an example of the present disclosure;
FIG. 7 is a schematic diagram of a neuron node relationship after a hidden layer in FIG. 5 or FIG. 6 is unfolded;
FIG. 8 is a schematic flow diagram of a data processing flow when a space-domain multi-point detection solution is adopted in a finger pressing state detection method of the present disclosure;
FIG. 9 is a schematic flow diagram of a data processing flow when a time-sequence detection solution is adopted in a finger pressing state detection method of the present disclosure;
FIG. 10 is a schematic comparison diagram of a falling edge in a down state and a rising edge in an up state in the present disclosure;
FIG. 11 is a schematic flow diagram of utilizing a state memory sequence for assisting decision in an example of the present disclosure;
FIG. 12 is another schematic flow diagram of utilizing a state memory sequence for assisting decision in an example of the present disclosure;
FIG. 13 is a schematic structure diagram of a finger pressing state detection apparatus in an example of the present disclosure; and
FIG. 14 is a schematic structure diagram of a neural network model training apparatus in an example of the present disclosure.

### DETAILED DESCRIPTION OF THE EMBODIMENTS

The technical solutions in the examples of the present disclosure are clearly and completely described below in conjunction with the drawings in the examples of the present disclosure, and apparently, the examples described are a part rather than all of the examples of the present disclosure. On the basis of the examples in the present disclosure, all other examples obtained by those of ordinary skill in the art without creative efforts shall fall within the protection scope of the present disclosure.

It should be understood that, the present disclosure can be implemented in different forms and should not be interpreted as limited to the examples disclosed herein. On the contrary, provision for these examples will make the disclosure thorough and complete, and the scope of the present disclosure is completely transferred to those skilled in the art. In the drawings, for clarity, dimensions and relative dimensions of layers and regions may be exaggerated, and the same drawing marks represent the same elements from beginning to end.

It should be understood that, when an element or a layer is referred to as "on...", "adjacent to...", "connected to", or "coupled to" other elements or layers, the element or the layer may be directly on, adjacent to, connected to, or coupled to the other elements or layers, or there may be intermediate elements or layers. On the contrary, when an element is referred to as "directly on...", "directly adjacent to...", "directly connected to", or "directly coupled to" other elements or layers, there are no intermediate elements or layers. It should be understood that, although the terms first, second, third, etc. may be used for describing various elements, components, regions, layers, and/or portions, these elements, components, regions, layers, and/or portions should not be limited by these terms. These terms are merely used for distinguishing one element, component, region, layer or portion from another element, component, region, layer or portion. Therefore, without departing from the teachings of the present disclosure, the first element, component, region, layer, or portion discussed below may be represented as a second element, component, region, layer, or portion.

The terms used herein are merely for the purpose of describing the specific examples and do not serve as limitations of the present disclosure. When used herein, the "one", "one piece", and "the/said" in singular forms are also intended to include plural forms, unless other manners are clearly indicated in the context. It should also be understood that when the terms "composition" and/or "including" are used in the specification, the presence of the features, integers, steps, operations, elements, and/or components is determined, but does not exclude the presence or addition of one or more other features, integers, steps, operations, elements, components, and/or groups. When used herein, the term "and/or" includes any and all combinations of the listed items.

In order to thoroughly understand the present disclosure, detailed structures and steps will be disclosed in the following descriptions, so as to illustrate the technical solutions disclosed by the present disclosure. The preferred examples of the present disclosure are described in detail below, however, in addition to these detailed descriptions, the present disclosure may also have other implementation manners.

The example of the present disclosure provides a finger pressing state detection solution, for detecting to obtain a finger pressing state, for example, the finger pressing state includes but is not limited to a finger touch state and a finger non-touch states; and on the basis of the finger pressing state detected above, the solution may be applied to a fingerprint recognition scene or other applications that include touch function scenes, and for example, while using an electronic device such as a mobile phone and a computer, a user needs to touch a pressing area (such as a screen or other touchable areas, such as a physical contact plate surface) with a finger to carry out operation or recognition. For example, the above touch function includes but is not limited to, for example: touch unlocking, single-click confirmation, double-click screenshot, etc., which is not limited specifically. Generally, the electronic device needs to capture a finger pressing state at first, and then triggers a corresponding touch function. In addition, the above electronic device includes product devices with touch function needs, such as a mobile phone, a computer, and a tablet computer, which is also not limited specifically.

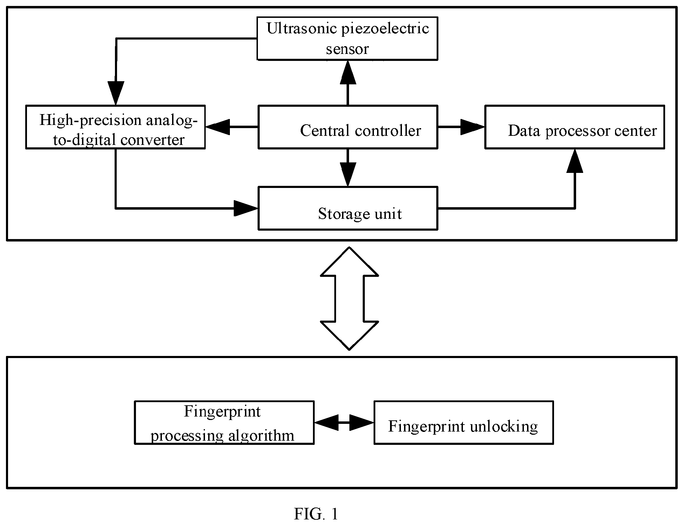

In order to facilitate understanding for the example of the present disclosure, a processing system framework adopted in the example of the present disclosure is introduced at first, as shown in FIG. 1, the processing system framework provided by the present disclosure includes a finger pressing state detection apparatus and a touch function apparatus, where in an example of FIG. 1, the touch function apparatus includes but is not limited to a fingerprint unlocking function apparatus, and may also be other touch function systems, which is not limited in the example of the present disclosure. The processing system is described below through taking fingerprint unlocking as an example.

As a framework instance, the finger pressing state detection apparatus includes an ultrasonic piezoelectric sensor, an analog-to-digital converter, a storage unit, a data processing center, and a central controller, where the ultrasonic piezoelectric sensor, the analog-to-digital converter, the storage unit, and the data processing center are respectively connected with the central controller, for example, the ultrasonic piezoelectric sensor includes an ultrasonic array, a coupling layer and other structures, and the ultrasonic array may be a PVDF (polyvinylidene fluoride) array, which is not limited specifically. The analog-to-digital converter may be a high-precision analog-to-digital converter, which is not limited specifically. The central controller is used for controlling the ultrasonic piezoelectric sensor to complete excitation and recovery of the ultrasonic array, the analog-to-digital converter is used for completing digital signal conversion for an analog ultrasonic echo signal, the ultrasonic echo signal subjected to analog-to-digital conversion is sent to the data processing center via the storage unit, and the data processing center detects through adopting the finger pressing state detection method provided by the example of the present application and on the basis of the ultrasonic echo signal, so as to obtain a finger pressing state.

The fingerprint unlocking function apparatus includes a fingerprint processing algorithm module, after detecting the finger pressing state, the fingerprint processing algorithm module carries out preliminary processing for fingerprint data, and carries out further processing through a fingerprint recognition algorithm, so as to complete related fingerprint registration, fingerprint recognition unlocking and other functions.

It needs to be noted that, FIG. 1 is merely schematic and does not limit a processing framework adopted actually.

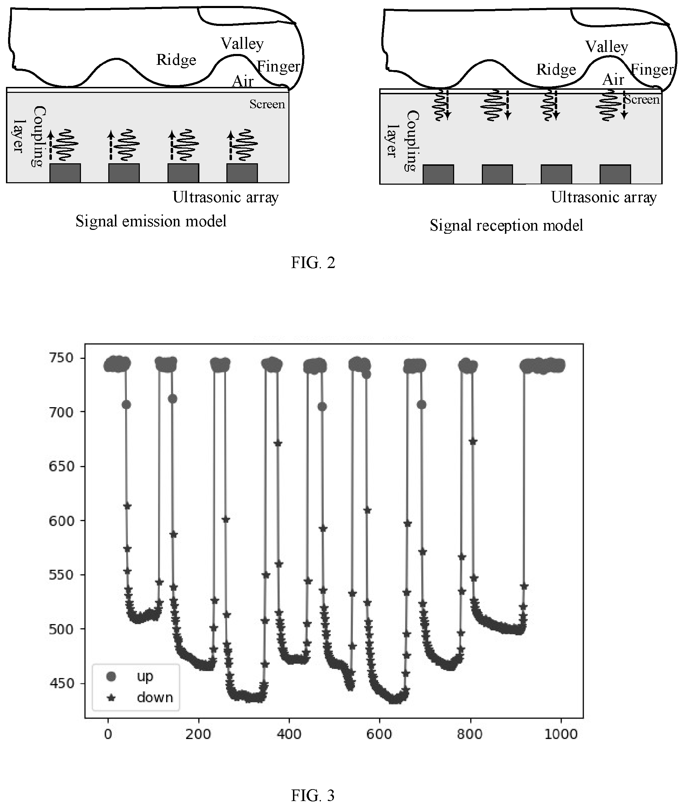

Continuing to refer to FIG. 2, it is taken as an example that the pressing area is a screen in FIG. 2, and FIG. 2 is a schematic diagram of an ultrasonic signal emission model and an ultrasonic echo signal reception model of the ultrasonic piezoelectric sensor. The ultrasonic array of the ultrasonic piezoelectric sensor emits an ultrasonic signal to the screen at a set fixed frequency, the ultrasonic signal penetrates through the screen to reach ridge positions and valley positions of an epidermal layer of a finger, and due to the fact that the screen is fitted with the ridge positions (fingerprint protrusions), the valley positions (fingerprint depressions) of the finger are not in contact with the screen, an ultrasonic echo signal in a state of no finger coverage is taken as Base, an ultrasonic echo signal in a state of finger coverage is taken as Touch, and a difference value between Touch and Base is a texture image of ridges, that is, a fingerprint texture.

Due to a great acoustic impedance difference between the epidermis of a human body and the air, reflectivity of the ultrasonic signal while being propagated to different contact surfaces is different, therefore, there is a difference between intensity of the ultrasonic echo signal in a finger touch state and intensity of the ultrasonic echo signal in an empty sampling state (where there is no coverage on the screen, i.e., in a finger non-touch state); and a finger pressing state may be judged through the difference, where a calculation manner for the reflectivity under touch and non-touch may be shown as follows: ${R}_{air} = \frac{{z}_{air} - {z}_{s}}{{z}_{air} + {z}_{s}} , {R}_{finger} = \frac{{z}_{finger} - {z}_{s}}{{z}_{finger} + {z}_{s}}$
where zₐᵢᵣ,*z_{finger}*,zₛ respectively represent impedance of the air, impedance of the human epidermis, and impedance of the screen.

Generally, the impedance of the screen is much greater than the impedance of the air, the impedance of the air is about 430 Rayl, for example, the currently-adopted impedance of the screen is about 13 MRayl, in the finger non-touch state, when an ultrasonic wave is transmitted from the screen to a screen contact surface of the air, the impedance of the air may be ignored, and the ultrasonic signal is almost completely reflected; while in the finger touch state, both reflection and transmission occur simultaneously, a part of the ultrasonic signal penetrates through the epidermis of the finger, a part of the ultrasonic signal is reflected, and therefore, the intensity of the ultrasonic echo signal in the finger non-touch state is higher, while the intensity of the ultrasonic echo signal in the finger touch state is greatly reduced. From the above analysis, it may be known that, in the different finger pressing states, the intensity of the ultrasonic echo signal is in a changing state, and the finger pressing state may be judged according to intensity change features of the above ultrasonic echo signal.

As introduced in the background, in a traditional solution, a large amount of data covering different scene conditions is needed, and a corresponding benchmark threshold value is set, there is a certain difficulty in covering all different cases, for example, there are great differences in signal intensity under the same conditions, and there are greater differences in changes of an ultrasonic echo signal when a finger is in different states, for example, when the finger is dry, the intensity of the ultrasonic echo signal is lower, while when the finger is in a moist state or a wetting state, the intensity of the ultrasonic echo signal is higher; and in addition, the signal intensity is also different at different temperatures, and the intensity of the ultrasonic echo signal is higher under high-temperature conditions, and is lower under low-temperature conditions. Therefore, low generalization capability and low accuracy of the solution are caused.

Therefore, in the example of the present disclosure, on the basis of the problem of poor generalization of the traditional solution due to large differences in the intensity situations of the ultrasonic echo signal under different conditions, a finger pressing state detection solution based on a neural network model is disclosed, and detailed descriptions will be respectively carried out through the examples.

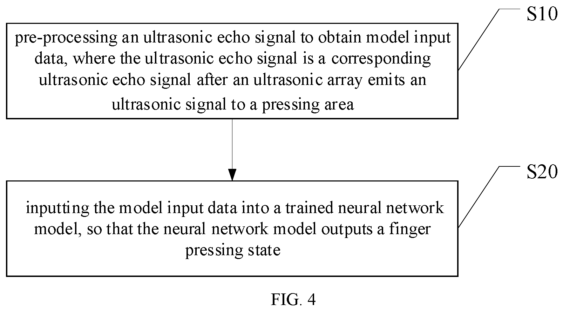

As shown in FIG. 4, a finger pressing state detection system shown in FIG. 1 is taken as an example, the example of the present disclosure provides a finger pressing state detection method based on a neural network model, and the method includes the following steps:
S10: pre-processing an ultrasonic echo signal to obtain model input data, where the ultrasonic echo signal is a corresponding ultrasonic echo signal after an ultrasonic array emits an ultrasonic signal to a pressing area.

An electronic device includes a finger pressing state detection apparatus and a pressing area, where the pressing area may be a touch screen or other touch positions, such as a touch panel, which is not limited specifically. The electronic device utilizes the ultrasonic array of an ultrasonic piezoelectric sensor for emitting an ultrasonic signal to the pressing area at a fixed frequency, and utilizes the ultrasonic array of the ultrasonic piezoelectric sensor for receiving a reflected signal formed by the emitted ultrasonic signal, i.e., an ultrasonic echo signal, and the ultrasonic echo signal converted to be in a digital form by an analog-to-digital converter reaches a data processing center via a storage unit. The data processing center pre-processes the ultrasonic echo signal in the storage unit to obtain model input data.

S20: inputting the model input data into a trained neural network model, so that the neural network model outputs a finger pressing state.

In the example of the present disclosure, the neural network model that outputs the finger pressing state on the basis of the ultrasonic echo signal is trained in advance, and the neural network model is obtained through training on the basis of a large amount of trained sample date, and includes but is not limited to a neural network model constructed on the basis of a recurrent neural network (RNN) or a convolutional neural network (CNN). Network parameters of the neural network model are obtained through training finger pressing data that covers a plurality of scenes, a plurality of temperatures, and other conditions, and is constructed in an early stage, and the finger pressing data obtained in each scene has classification label information for pressing, and during model training, the training may be carried out in a set model training manner until the neural network model that meets requirements, i.e., the trained neural network model, is obtained. Descriptions for subsequent examples may be referred to for training contents for the model.

In the step, the data processing center pre-process the ultrasonic echo signal to obtain model input data, and then inputs the model input data into the trained neural network model, so that the neural network model outputs the corresponding finger pressing state. For example, the trained neural network model may be built into the electronic device or deployed at a server side, and used in a form of model call, which is not limited specifically.

It may be seen that, in the example, a finger pressing state detection method based on a neural network model is provided, the model input data is obtained through pre-processing the ultrasonic echo signal, and the model input data is input into the trained neural network model, so that the neural network model outputs the corresponding finger pressing state; the corresponding intensity features of the ultrasonic echo signal, of the different finger pressing states are different, the pre-processed ultrasonic echo signal, i.e., the model input data, represents changes in the intensity features, and the trained neural network model outputs the finger pressing state on the basis of the model input data, without a manner of setting a benchmark threshold value to compare, so that differences among different ultrasonic modules (such as differences in ultrasonic piezoelectric sensors adopted by different electronic devices) may be eliminated; and the same network model parameter has higher generalization capability among the different ultrasonic modules, moreover, differences in various different scenes (temperatures, frequencies, etc.) and different finger states may be effectively eliminated, and a plurality of special scenes such as a high temperature, a low temperature and finger wetting may be covered, so that higher generalization capability and accuracy are achieved.

It needs to be noted that, in the example of the present disclosure, the neural network model may be constructed on the basis of a recurrent neural network (RNN) or a convolutional neural network (CNN), which is not limited specifically. It is taken as an example that the neural network model is constructed on the basis of a recurrent neural network, and in an example, the neural network model includes a first classification decision layer and a multi-layer recurrent neural network, and output of the multi-layer recurrent neural network is connected with the corresponding first classification decision layer; or, the neural network model includes a second classification decision layer and a single-layer recurrent neural network, and output of the single-layer recurrent neural network is connected with the second classification decision layer. That is to say, the recurrent neural network adopted may be a single-layer recurrent neural network or a multi-layer recurrent neural network. It should be understood that, the first classification decision layer and the second classification decision layer are merely expressions used for distinguishing between the single-layer network and the multi-layer network, and may be the same classification decision layer.

The adopted single-layer recurrent neural network or multi-layer recurrent neural network may be determined according to actual needs, which is not limited specifically. Due to the fact that finger pressing state detection is a process of pressing state detection within a long period of time, and in the recurrent neural network, each current state is related to a previous state or a subsequent state, therefore, in the example of the present disclosure, more accurate detection for the finger pressing state is benefited through relation to the previous state or the subsequent state, and in a manner of the neural network model based on the recurrent neural network.

In order to facilitate understanding for the subsequent detection solution, the neural network model based on the recurrent neural network, which is provided by the example of the present disclosure will be introduced below at first.

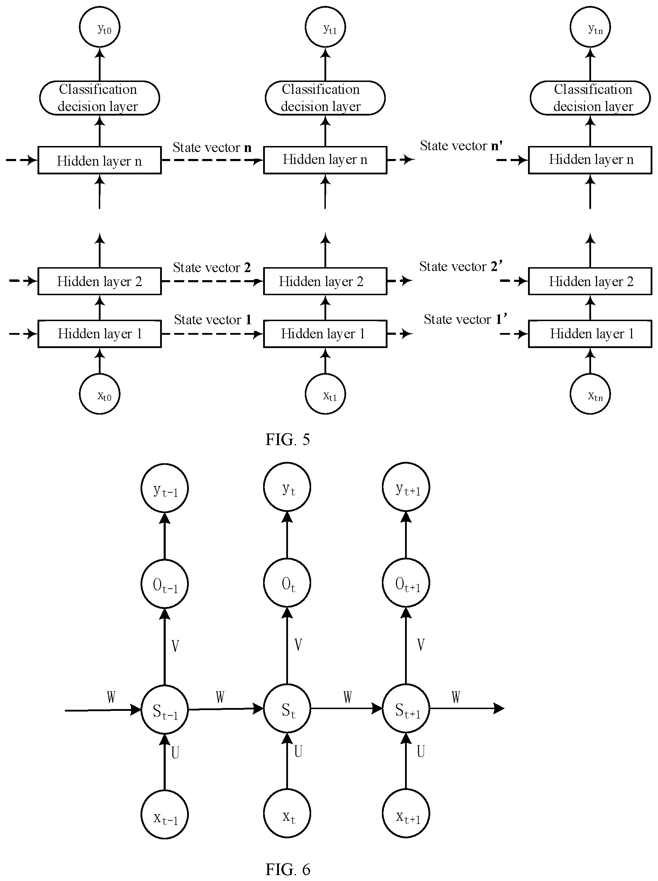

As shown in FIG. 5, as an example, the neural network model includes a first classification decision layer and a multi-layer recurrent neural network, output of the multi-layer recurrent neural network is connected with the first classification decision layer, because of being related to a time sequence state, the multi-layer recurrent neural network is unfolded according to the time sequence state, then the multi-layer recurrent neural network includes hidden layer networks respectively corresponding to different time sequences, and the hidden layer networks respectively represent network architectures corresponding to the different time sequences; and it may be seen that, the hidden layer network includes n hidden layers, n≥2, the n hidden layers in the hidden layer network are sequentially connected, output of the hidden layer of the hidden layer network in the previous time sequence is transferred to the hidden layer at the same layer in the next time sequence, output of the last hidden layer in the hidden layer network, i.e., output of the multi-layer recurrent neural network, is connected with the first classification decision layer, and the classification decision layer in FIG. 5 is the first classification decision layer.

Specifically, continuing to refer to FIG. 5, in the example, the folding is carried out according to a time sequence, xₜ₀, xₜ₁,..., xₜₙ respectively represent input data of the hidden layer networks corresponding to the different time sequences t0 - tn in the multi-layer recurrent neural network, and yₜ₀, yₜ₁,..., yₜₙ represent the finger pressing states output by the classification decision layer in the corresponding time sequences. The hidden layer network includes a hidden layer 1, a hidden layer 2 .., a hidden layer n, output of the hidden layer n is connected with input of the classification decision layer, and a value of each hidden layer of the hidden layer network in the previous time sequence is transferred to the hidden layer at the same layer in the next time sequence, for example, output of the hidden layer 1 in the time sequence t0 is transferred to the hidden layer 1 corresponding to the time sequence t1, and output of the hidden layer 1 corresponding to the time sequence t1 is transferred to the hidden layer 1 corresponding to the time sequence t2; and a transferred content includes a state vector output by the hidden layer, for example, the hidden layer 1 in the time sequence t0 transfers a state vector 1 to the hidden layer 1 in the time sequence t1, output of the previous hidden layer is transferred to the next hidden layer, and relationships among the hidden layers at the same layer or other layers are similar, and are as shown in FIG. 5 specifically, which are not be described in detail herein. In addition, it is worth noting that, there is further a weight matrix parameter in the multi-layer recurrent neural network, and will be introduced for further description when the single-layer recurrent neural network is introduced later, a specific number of the hidden layers in the multi-layer recurrent neural network is adjustable, and a dimension of the model input data is also adjustable, which are not limited specifically in the example of the present disclosure.

As shown in FIG. 6, as an example, the neural network model includes a second classification decision layer and a single-layer recurrent neural network, and output of the single-layer recurrent neural network is connected with the second classification decision layer, because of being related to a time sequence state, the single-layer recurrent neural network is unfolded according to the time sequence state, then the single-layer recurrent neural network includes hidden layer networks respectively corresponding to different time sequences, and the hidden layer networks respectively represent network architectures corresponding to the different time sequences; and the hidden layer network of the single-layer recurrent neural network only includes one hidden layer, output of the hidden layer in the previous time sequence is transferred to the hidden layer in the next time sequence, and output of the hidden layer is connected with the second classification decision layer. Being different from the multi-layer recurrent neural network, the single-layer recurrent neural network only includes a single hidden layer.

Specifically, as shown in FIG. 6, in an example of FIG. 6, the unfolding is carried out through taking three time sequences as an example for description, xₜ₋₁, zₜ₁, xₜ₊₁ respectively represent input data of the hidden layer networks corresponding to the three time sequences, and yₜ₋₁, yₜ₁, yₜ₊₁ respectively represent the finger pressing states output by the classification decision layer in the corresponding time sequences. The hidden layer network includes a hidden layer, output of the hidden layer 1 corresponding to the time sequence t-1 is transferred to the hidden layer in the time sequence t1 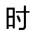 , and output of the hidden layer corresponding to the time sequence t1 is transferred to the hidden layer corresponding to the time sequence t+1.

In the above single-layer or multi-layer recurrent neural network, weight matrices U, W, V are linear relationship parameters in the recurrent neural network, the single-layer recurrent neural network shown in FIG. 6 continues to be taken as an example herein to describe a working principle of the neural network model based on the single-layer recurrent neural network, and a network framework of the neural network model based on the single-layer recurrent neural network has a following expression: ${y}_{t} = ϕ \left({O}_{t}\right)$ ${O}_{t} = g \left(V⋅{S}_{t}\right)$ ${S}_{t} = f \left(U⋅{x}_{t}+W⋅{S}_{t - 1}\right)$
where f(*) and g(*) represent activation functions of the corresponding layers, ϕ(*) represents a classification decision algorithm adopted in the classification decision layer, for example, the classification decision algorithm may be a binary-classification algorithm or a multi-classification algorithm, which is not limited specifically, St represents a value of the hidden layer corresponding to the time sequence t, i.e., the state vector mentioned above, Sₜ₋₁ represents a value of the hidden layer corresponding to the time sequence t-1, Sₜ₊₁ represents a value of the hidden layer corresponding to the time sequence t+1, Ot represents output of the hidden layer corresponding to the time sequence t, Oₜ₋₁ represents output of the hidden layer corresponding to the time sequence t-1, Oₜ₊₁ represents output of the hidden layer corresponding to the time sequence t+1, yₜ represents output of the classification decision layer corresponding to the time sequence t, yₜ₊₁ represents output of the classification decision layer corresponding to the time sequence t-1, and yₜ₊₁ represents output of the classification decision layer corresponding to the time sequence t+1, the weight matrix U represents a weight matrix from model input to the hidden layer, the weight matrix V represents a weight matrix from the hidden layer to the classification decision layer, and the weight matrix W represents a weight matrix from the hidden layer in the previous time sequence to the corresponding hidden layer in the next time sequence. Therefore, after the input vector x_{t₀} is output via the classification decision layer and after a decision, the finger pressing state in the time sequence is output finally, and is may be seen that, an output state in each time sequence is not only influenced by current input, but also related to information of the previous time sequence.

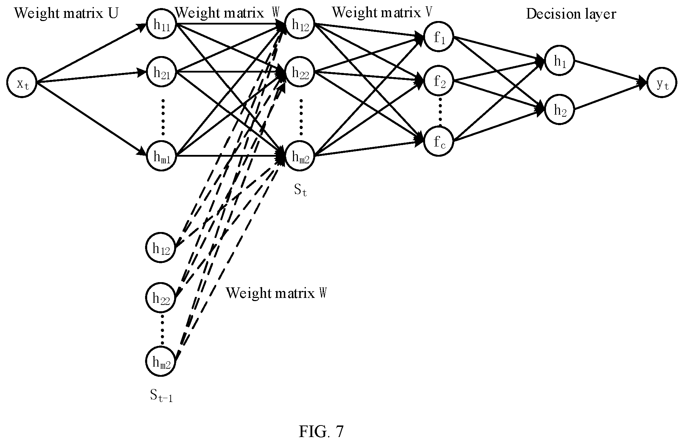

Further, in an example, in the above single-layer or multi-layer recurrent neural network, a number of neuron nodes included in the hidden layer is also adjustable, and training is specifically carried out according to set parameters, which is not limited in the example of the present disclosure. As an example, the single-layer recurrent neural network is taken as an example, and the network with nodes may be shown in FIG. 7 after being unfolded. xₜ represents an input vector in the current time sequence t, h₁₁, h₂₁, ...hₘ₁ represents a value of the neuron nodes of the hidden layer in the time sequence t, h₁₂, h₂₁, ...hₘ₂ represents a value of the neuron nodes of the nodes of the hidden layer in the previous time sequence t-1, f₁, f₂, ...h_{c} represents an activation function of the hidden layer in the current time sequence t, and yₜ represents the finger pressing state output by the classification decision layer in the time sequence t.

It needs to be noted that, it is taken as an example for introduction that the neural network model is the neural network model constructed on the basis of the recurrent neural network in the example, on the basis of the neural network model constructed on the basis of the recurrent neural network, the example of the present disclosure further provides at least two detection solutions, the two detection solutions have a difference in processing for model input data, respectively have corresponding advantages, and are respectively described below in detail.

A first solution is a space-domain multi-point detection solution

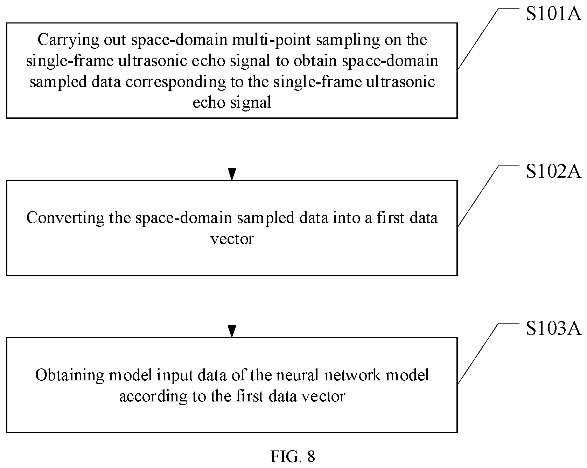

As shown in FIG. 8, in an example, on the basis of the above neural network model constructed on the basis of the recurrent neural network, the step S10, i.e., the pre-processing an ultrasonic echo signal to obtain model input data includes:
S101A: carrying out space-domain multi-point sampling on the single-frame ultrasonic echo signal to obtain space-domain sampled data corresponding to the single-frame ultrasonic echo signal;
S102A: converting the space-domain sampled data into a first data vector; and
S103A: obtaining model input data of the neural network model according to the first data vector.

The example is one example of the above space-domain multi-point detection solution, a data processing center obtains the single-frame ultrasonic echo signal, and carries out space-domain multi-point sampling on the single-frame ultrasonic echo signal, so that the space-domain sampled data corresponding to the single-frame ultrasonic echo signal may be obtained.

As shown in FIG. 2, it is taken as an example that the pressing area is a screen in FIG. 2, and FIG. 2 is a schematic diagram of an ultrasonic signal emission model and an ultrasonic echo signal reception model of the ultrasonic piezoelectric sensor. The ultrasonic array of the ultrasonic piezoelectric sensor emits an ultrasonic signal to the screen at a set fixed frequency, the ultrasonic signal penetrates through the screen to reach ridge positions and valley positions of an epidermal layer of a finger, and due to the fact that the screen is fitted with the ridge positions (fingerprint protrusions), the valley positions (fingerprint depressions) of the finger are not in contact with the screen, an ultrasonic echo signal in a state of no finger coverage is taken as Base, an ultrasonic echo signal in a state of finger coverage is taken as Touch, and a difference value between Touch and Base is a texture image of ridges, that is, a fingerprint texture.

Generally, the impedance of the screen is much greater than the impedance of the air, the impedance of the air is about 430 Rayl, for example, it is assumed that the impedance of the screen adopted currently is about 13 MRayl, in the finger non-touch state, when an ultrasonic wave is transmitted from the screen to a screen contact surface of the air, the impedance of the air may be ignored, and the ultrasonic signal is almost completely reflected; while in the finger touch state, both reflection and transmission occur simultaneously, a part of the ultrasonic signal penetrates through the epidermis of the finger, a part of the ultrasonic signal is reflected, and therefore, the intensity of the ultrasonic echo signal in the finger non-touch state is higher, while the intensity of the ultrasonic echo signal in the finger touch state is greatly reduced. As shown in FIG. 3, it is assumed that at an acquisition frequency of 50 Hz, an action of finger coverage, lifting, coverage and lifting is repeated for 20 seconds to acquire 1000 frames of data, and a relationship diagram between the ultrasonic echo signal and the finger pressing state, which is shown in FIG. 3, is obtained, where up represents a finger not-touch state, down represents a finger touch state, a signal value is a full-screen intensity mean value, and the horizontal axis represents a frame number; and from FIG. 3, it may also be seen that, an intensity value of the ultrasonic echo signal corresponding to ridge positions is low in the case of finger touch, and has a difference from an intensity value of the ultrasonic echo signal at valley positions. Therefore, on the basis of the above characteristics, ultrasonic echo intensity change features may be extracted in a manner of space-domain multi-point sampling.

For example, it is assumed that a space-domain dimension of the single-frame ultrasonic echo signal after analog-to-digital conversion processing is m*n, and each point in a space domain of the single-frame ultrasonic echo signal represents ultrasonic echo signal intensity corresponding to the point; and the space-domain multi-point detection solution is carrying out space-domain multi-point sampling on the single-frame ultrasonic echo signal, converting obtained space-domain sampled data to obtain a first data vector that matches an input dimension of the recurrent neural network, then obtaining model input data of the neural network model according to the first data vector and taking the model input data as network input, inputting the model input data into the recurrent neural network in the neural network model, and giving the output of the recurrent neural network to the classification decision layer in the neural network model after weight calculation of the recurrent neural network, so that the classification decision layer outputs the current finger pressing state.

It may be seen that, in the example, a finger pressing state detection method based on a neural network model is provided, and in conjunction with the neural network model constructed on the basis of the recurrent neural network, the space-domain multi-point sampling is carried out on the single-frame ultrasonic echo signal, and then network input of the recurrent neural network is formed, so that the finger pressing state is obtained through recognition. In the example, in addition to improving applicability and generalization through not adopting a manner of sampling a benchmark threshold value to compare, a data volume of the model input data may also be reduced because of utilizing the multi-point space-domain sampling, so that processing efficiency is increased.

In conjunction with the above example, in an example, the step S101A, i.e., the carrying out space-domain multi-point sampling on the single-frame ultrasonic echo signal to obtain space-domain sampled data corresponding to the single-frame ultrasonic echo signal includes: carrying out space-domain sampling on the single-frame ultrasonic echo signal according to a preset row interval and a preset column interval to obtain space-domain sampled data corresponding to the single-frame ultrasonic echo signal.

For example, it is assumed that a space-domain dimension of the single-frame of ultrasonic echo signal data is m * n, a matrix m₁ * n₁ is obtained through carrying out space-domain sampling with a row interval r1 and a column interval c1 on Base and Touch frames with the dimension m * n, finally, the sampled matrix may form a matrix vector 1*(m₁ * n₁), i.e., a first data vector, and the first data vector is taken as input of the above recurrent neural network, i.e., input of the neural network model. It needs to be noted that, the above row interval r1 and column interval c1 may be set as needed, which are not limited specifically.

In the example, during the multi-point space-domain sampling on the ultrasonic echo signal, the sampling may be specifically carried out at a preset row interval and a preset column interval, and in addition to reduction for a data volume and improvement for generalization capability, loss change features of the ultrasonic echo signal can be effectively reduced in a manner of interval sampling, so that accuracy of subsequent detection is ensured.

Certainly, in other examples, specific sampling intervals of the preset row interval and the preset column interval may be determined according to an actual situation, which are not limited in the example of the present disclosure; and in addition, a space-domain multi-point sampling manner with no row interval and column interval may also be adopted, which is also not limited in the example of the present disclosure.

In an example, the step S103A, i.e., the obtaining model input data of the neural network model according to the first data vector includes: carrying out normalization processing on the first data vector, where the first data vector subjected to the normalization processing is model input data of the neural network model.

In the example, the carrying out normalization processing on the first data vector obtained through conversion refers to carrying out normalization processing on all vector elements in the first data vector, so that values of the elements in the first data vector are within a uniform range, therefore, the first data vector subjected to the normalization processing is model input data of the neural network model, and a subsequent calculation amount of the neural network model may be effectively reduced, so that whole efficiency of finger pressing state detection is increased. It needs to be noted that, in other examples, the converted first data vector may also be taken as the model input data, which is not limited specifically.

The space-domain multi-point sampling solution provided by the example of the present disclosure is described in the above example, and a second solution provided by the example of the present disclosure will be described below.

The second solution is a time-sequence detection solution

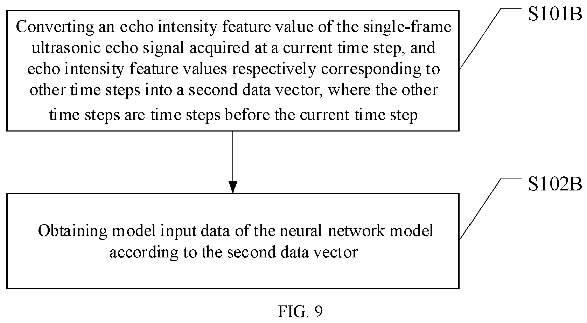

As shown in FIG. 9, in an example, on the basis of the above neural network model constructed on the basis of the recurrent neural network, the step S10, i.e., the pre-processing an ultrasonic echo signal to obtain model input data includes:
S101B: converting an echo intensity feature value of the single-frame ultrasonic echo signal acquired at a current time step, and echo intensity feature values respectively corresponding to other time steps into a second data vector, where the other time steps are time steps before the current time step; and
S102B: obtaining model input data of the neural network model according to the second data vector.

The example is one example of the above time-sequence detection solution, a data processing center obtains acquired ultrasonic echo signals at time steps, then calculates ultrasonic echo intensity feature values of single-frame ultrasonic echo signals at the time steps, and correspondingly takes the ultrasonic echo intensity feature values as intensity values x_{T_{N}} corresponding to the time steps; a data time step sequence N is taken as an example, it is assumed that a current time step is T_{N}, and the echo intensity feature value corresponding to the current time step T_{N} is x_{T_{N}}, then in the example, the echo intensity feature value of the single-frame ultrasonic echo signal acquired at the current time step T_{N}, and the echo intensity feature values corresponding to the other time steps are converted into a second data vector X_{T_{N}} that matches an input dimension of the recurrent neural network, where the other time steps are the time steps before the current time step T_{N}, and then the model input data of the neural network model is obtained according to the second data vector.

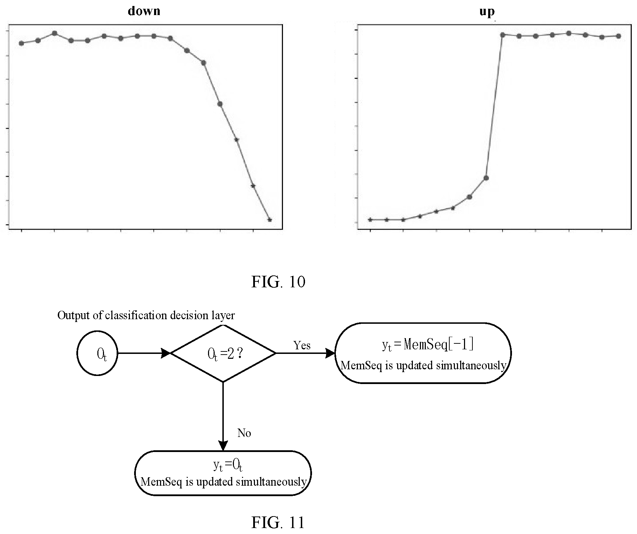

FIG. 10 is a schematic comparison diagram of ultrasonic echo intensity changes in an up state and a down state, the horizontal axis represents time, and the vertical axis represents ultrasonic echo intensity; and from FIG. 10, it may be seen that, within continuous time, there is an obvious falling edge in a state change from up to down (as shown in the left drawing of FIG. 10), and an obvious rising edge in a state change from down to up (as shown in the right drawing of FIG. 10), therefore, the current finger pressing state may be further judged through continuous time sequence changes of different frames.

It may be seen that, in the example, a finger pressing state detection method based on a neural network model is provided, and in conjunction with the above neural network model constructed on the basis of the recurrent neural network, the echo intensity feature value of the single-frame ultrasonic echo signal acquired at the current time step, and the echo intensity feature values respectively corresponding to the other time steps are converted into network input of the recurrent neural network, so as to recognize the finger pressing state. In the example, in addition to improving applicability and generalization through not adopting a manner of sampling a benchmark threshold value to compare, due to changes of a finger in a time domain during an up-down action, detection for the finger pressing state through the space-domain state changes in time may be realized through taking a multi-time-step space-domain sequence as model input, continuous actions may be captured, and the method is applicable to more scenes, such as completely covering changes in ultrasonic echo intensity in high-temperature scenes or low-temperature scenes, so that more accurate or diverse finger pressing state detection is realized.

In conjunction with the above example, in an example, the other time steps are the first N-1 continuous time steps of the current time step N, that is to say, in the example, the echo intensity feature value of the single-frame ultrasonic echo signal acquired at the current time step N, and the echo intensity feature values respectively corresponding to the first N-1 continuous time steps of the current time step N, are converted into a second data vector, that is: ${X}_{{T}_{n}} = \left[{x}_{{T}_{n - N + 1}},…,{x}_{{T}_{n - 1}},{x}_{{T}_{n}}\right]$
for example, X_{Tₙ} represents the second data vector, and X_{Tₙ}, x_{Tₙ₋₁}, ..., x_{T_{n-N+1}} respectively represent the echo intensity feature values respectively corresponding to the current time step N and the first N-1 continuous time steps of the current time step N.

In the example, detection for the finger pressing state through the space-domain state changes at the continuous time steps may be realized, and more accurate continuous actions may be captured, so that further accurate or diverse finger pressing state detection is realized. Certainly, in other examples, the other time steps may also be the echo intensity feature values respectively corresponding to the previous time steps with continuous intervals, which are not limited specifically in the example of the present disclosure.

In an example, the step S102B, i.e., the obtaining model input data of the neural network model according to the second data vector includes: carrying out normalization processing on the second data vector, where the second data vector subjected to the normalization processing is model input data of the neural network model.

In the example, the carrying out normalization processing on the second data vector obtained through conversion refers to carrying out normalization processing on all vector elements in the second data vector, so that values of the elements in the second data vector are within a uniform range, therefore, the second data vector subjected to the normalization processing is model input data of the neural network model, and a subsequent calculation amount of the neural network model may be effectively reduced, so that whole efficiency of finger pressing state detection is increased. It needs to be noted that, in other examples, the converted second data vector may also be taken as the model input data, which is not limited specifically.

In an example, the echo intensity feature value includes an echo intensity mean value of the single-frame ultrasonic echo signal, or the echo intensity feature value includes the minimum echo intensity value in the single-frame ultrasonic echo signal, which is not limited specifically. Single-frame signal features may be more comprehensively acquired in a manner of the echo intensity mean value; while calculation is simplified in a manner of the minimum echo intensity value.

For example, in the above example, the above echo intensity mean value may be an arithmetic average mean value or mean values in other forms, which is not limited specifically in the example of the present disclosure, and may be set as needed, so that flexibility of the solution is ensured.

It should be understood that, in the above example of the detection solution, the neural network model based on the recurrent neural network is taken as an example for description, and in other examples, when other neural network models such as a convolutional neural network, are adopted, the model input data may also be processed through the same detection solution, which is not limited specifically.

It needs to be noted that, as needed, a binary classification algorithm or a ternary classification algorithm or other multi-classification cases may be adopted for the classification decision layer in the above neural network model, which is not limited specifically.

In an example, the finger pressing state output by the neural network model includes: a classification determined state or a classification undetermined state, where the classification determined state is any one of at least two types of pressing states, refers to a state that a pressing state is already clear, and may be used for subsequent touch function applications, such as a finger touch state, a finger non-touch state, or other pressing states; while the classification undetermined state refers to an undetermined state that the pressing state further needs to be further confirmed.

In the example, a binary classification algorithm or a ternary classification algorithm or other multi-classification cases may be adopted for the classification decision layer in the above neural network model to improve adaptability and increase application scenes of the solution, so that a higher application value is achieved.

In an example, the at least two types of pressing states include a finger touch state and a finger non-touch state; or, the at least two types of pressing states include a finger touch state, a finger non-touch state, a touch-to-non-touch critical state, and a non-touch-to-touch critical state.

That is to say, in one case, the finger pressing state output by the neural network model is a finger touch state, a finger non-touch state, or an undetermined state; and in another case, the finger pressing state output by the neural network model is a finger touch state, a finger non-touch state, a touch-to-non-touch critical state, a non-touch-to-touch critical state, or an undetermined state.

Certainly, in other examples, the finger pressing state output by the neural network model may also have only the classification determined state, for example, when binary classification is adopted, in one case, the finger pressing state output by the neural network model is a finger touch state or a finger non-touch state; and in another case, the finger pressing state output by the neural network model is a finger touch state, a finger non-touch state, a touch-to-non-touch critical state, or a non-touch-to-touch critical state.

In conjunction with the above example, in an example, when the finger pressing state output by the neural network model includes a classification determined state or a classification undetermined state, after the step S20, i.e., the inputting the model input data into a trained neural network model, so that the neural network model outputs a finger pressing state, the method further includes:
S101: when the output finger pressing state is the classification determined state, taking the classification determined state as a final finger pressing state, and correspondingly updating the output classification determined state to a state memory sequence according to a time sequence; and
S102: when the output finger pressing state is the classification undetermined state, taking a pressing state which is finally recorded in the state memory sequence as a final finger pressing state, and correspondingly updating the pressing state to the state memory sequence according to a time sequence.

For example, it is assumed that the classification determined state includes a first-type state and a second-type state, in the example, decision for the finger pressing state is assisted through setting a continuously-updated state memory sequence, the undetermined state refers to a case that whether the first-type state or the second-type state output by the current neural network model cannot be determined, and the final finger pressing state needs to be further determined, and in this case:
when the output finger pressing state is the first-type state, the first-type state is taken as the final finger pressing state, and the output first-type state is correspondingly updated to a state memory sequence according to a time sequence;
when the output finger pressing state is the second-type state, the second-type state is taken as the final finger pressing state, and the output second-type state is correspondingly updated to the state memory sequence according to a time sequence; and
when the output finger pressing state is the classification undetermined state, a pressing state which is finally recorded is taken from the newest state memory sequence as a final finger pressing state, and the pressing state is correspondingly updated to the state memory sequence according to a time sequence.

The first-type state and the second-type state are different finger pressing states, and specific states are not limited, for example, in an example, the first-type state is a finger touch state, and the second-type state is a finger non-touch state.

It is taken as an example that the first-type state is the finger touch state, and the second-type state is the finger non-touch state, it should be understood that, a finger may be in an up state or a down state for a long time, in this case, data, especially in the time-sequence detection solution, may not have a rising edge or a falling edge in a data state in a time step sequence, in response to the above case, a state memory sequence is introduced, a fixed-length state memory sequence MemSeq is set, and the classification decision layer includes a multi-classification state that includes 0-up, 1-down, and 2-maintain; that is to say, output 0 of the classification decision layer represents the finger non-touch state, output 1 represents the finger touch state, output 2 represents a classification undetermined state, and a final finger pressing state is comprehensively determined through combining output of the neural network model with the state memory sequence MemSeq.

Specifically, referring to FIG. 11, when the finger pressing state output by the neural network model is the finger touch state, that is, in the case of output Ot = 1 of the classification decision layer, the final finger pressing state yₜ = 1, and the output finger touch state yₜ = 1 is correspondingly updated to the state memory sequence MemSeq according to a time sequence; when the finger pressing state output by the neural network model is the finger non-touch state, that is, in the case of output Ot = 0 of the classification decision layer, the final finger pressing state yₜ = 0, and the output finger non-touch state yₜ = 0 is correspondingly updated to the state memory sequence MemSeq according to a time sequence; and when the finger pressing state output by the neural network model is the undetermined state, that is, in the case of output Ot = 2 of the classification decision layer, a state which is finally recorded is obtained from the newest state memory sequence MemSeq as the finally-output finger pressing state, that is, yₜ = MemSeq[-1], and the state is correspondingly updated to the state memory sequence MemSeq. Generally, the above ternary-classification case is taken as an example, that is:
when output of the classification decision layer is an up state or a down state, the finally-output finger pressing state is the corresponding classification output state (the up state or the down state), and the state memory sequence MemSeq is correspondingly updated; and
when output of the classification decision layer is a maintain state, whether the finally-output finger pressing state is the up state or the down state is decided via a preceding state recorded by the state memory sequence MemSeq, and the state memory sequence MemSeq is correspondingly updated.

In the example, the decision is assisted through the state memory sequence MemSeq, so that state richness may be improved, and then higher accuracy of the detection solution is achieved, and a corresponding processing mechanism is provided when the neural network model cannot accurately output the up state or the down state, so that realizability of the solution is ensured, and moreover, high accuracy even in the case of facing different signal sampling frequencies can be achieved.

In conjunction with the above example, in an example, when the finger pressing state output by the neural network model includes a classification determined state or a classification undetermined state, after the step S20, i.e., the inputting the model input data into a trained neural network model, so that the neural network model outputs a finger pressing state, the method further includes:
S201: when the output finger pressing state is the classification determined state, taking the classification determined state as a final finger pressing state, and correspondingly updating the output classification determined state to a state memory sequence according to a time sequence; and
S202: when the output finger pressing state is the classification undetermined state, obtaining a pressing state with the highest probability from the newest state memory sequence as a finally-output finger pressing state, and correspondingly updating the pressing state to the state memory sequence.

For example, when ternary classification is adopted, the finger pressing state of the neural network model includes a first-type state, a second-type state, or a classification undetermined state, where the undetermined state refers to a case that whether the first-type state or the second-type state output by the current neural network model cannot be determined, and the final finger pressing state needs to be further determined, and in this case:
when the output finger pressing state is the first-type state, the first-type state is taken as the final finger pressing state, and the output first-type state is correspondingly updated to a state memory sequence according to a time sequence;
when the output finger pressing state is the second-type state, the second-type state is taken as the final finger pressing state, and the output second-type state is correspondingly updated to the state memory sequence according to a time sequence; and
when the output finger pressing state is the classification undetermined state, obtaining a pressing state with the highest probability from the newest state memory sequence as a final finger pressing state, and correspondingly updating the pressing state to the state memory sequence.

The first-type state and the second-type state are different finger pressing states, and specific states are not limited, for example, in an example, the first-type state is a finger touch state, and the second-type state is a finger non-touch state.

In the example, a fixed-length state memory sequence MemSeq is also set, and the classification decision layer includes a multi-classification state that includes 0-up, 1-down, and 2-maintain. The case is recorded through combining the output of the neural network model with the state memory sequence MemSeq, and the final finger pressing state is comprehensively determined; and being different from the above example, in the example, when the output of the classification decision layer is maintain, the highest probability of the state is recorded through combining with the memory sequence MemSeq, so as to determine the finally-output finger pressing state.

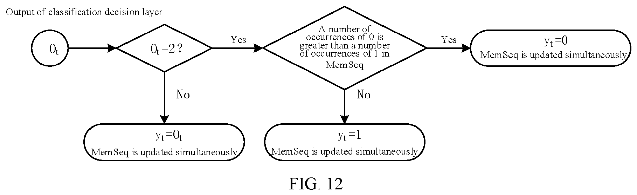

The above ternary classification is taken as an example, referring to FIG. 12, when the finger pressing state output by the neural network model is the finger touch state, that is, in the case of output Oₜ = 1 of the classification decision layer, the final finger pressing state yₜ = 1, and the output finger touch state yₜ = 1 is correspondingly updated to the state memory sequence MemSeq according to a time sequence; when the finger pressing state output by the neural network model is the finger non-touch state, that is, in the case of output Oₜ = 0 of the classification decision layer, the final finger pressing state yₜ = 0, and the output finger touch state yₜ = 0 is correspondingly updated to the state memory sequence MemSeq according to a time sequence; and when the finger pressing state output by the neural network model is the undetermined state, that is, in the case of output Oₜ = 2 of the classification decision layer, the pressing state with the highest state probability is taken from the state memory sequence MemSeq as the final finger pressing state, and specifically, as an example, whether a number of occurrences of 0 in the state memory sequence MemSeq is greater than a number of occurrences of 1 or not is judged at first, if so, yₜ = 0; or else, yₜ = 1, and the last state at this time is updated to the state memory sequence MemSeq. Generally, that is:
when output of the classification decision layer is an up state or a down state, the final finger pressing state is corresponding classification output (the up state or the down state), and the state memory sequence MemSeq is correspondingly updated; and
when the output of the classification decision layer is a maintain state, a state with the highest probability of 0 or 1 in the states recorded by the state memory sequence MemSeq is taken as the final finger pressing state, and the state memory sequence MemSeq is correspondingly updated.

In the example, another solution of assisting the decision through the state memory sequence MemSeq is provided, and state richness may be improved, so that higher accuracy of the detection solution is achieved, and a corresponding processing mechanism is also provided when the neural network model cannot accurately output the up state or the down state, so that realizability is ensured, and high accuracy even in the case of facing different signal sampling frequencies can be achieved; and in addition, preceding state probability processing is adopted, so that higher fault-tolerant rate of the solution in practical applications may further be achieved.

It should be understood that, in the above example, a length of the state memory sequence MemSeq is adjustable, which is not limited specifically, for example, the state memory sequence MemSeq may be an infinitely-long sequence with a length ranging from 1 to infinity; and the state memory sequence MemSeq may also be a fixed sequence, which is set as needed. Moreover, for other multi-classification cases, the decision may also be assisted through adopting the above state memory sequence, and the above ternary classification is merely an example description and does not limit the example of the present disclosure.

In an example, a finger movement of a user may further be judged through the state recorded by the state memory sequence MemSeq, for example, if the state memory sequence MemSeq is [1, 1, 1, 1, 1, 1], it may be considered as finger long-pressing; if the state memory sequence MemSeq is [0, 0, 1, 1, 0, 0], it may be considered as single-click; and if the state memory sequence MemSeq is [1, 1, 0, 0, 1, 1], it may be considered as double-click, so that more finger movement detection may be realized.

In the example, through further utilizing the state memory sequence MemSeq, a finger movement may be rapidly detected on the basis of a previous detection result for the finger pressing state.

In an example, when the above example is realized, an acquisition frequency for data may be adjusted as needed, and is not only 50 Hz, but also other acquisition frequencies, and the higher the acquisition frequency for the data, the more intensity gradient points in the up-down process, so that increasing for detection accuracy and efficiency is benefited.

It needs to be noted that, it is taken as an example that the finally-output result is up or down in the above example, and in other examples, other output final classification states may also be included, and the neural network model may be set for targeted training as needed, which is not limited specifically.

In conclusion, the example of the present disclosure provides a finger pressing state detection method based on a neural network model, and technical effects brought include: a manner of setting a benchmark threshold value to compare is not needed, so that differences among different ultrasonic modules may be eliminated; and the same network model parameter has higher generalization capability among the different ultrasonic modules, moreover, differences in various different scenes (temperatures, frequencies, etc.) and different finger states may be effectively eliminated, and a plurality of special scenes such as a high temperature, a low temperature and finger wetting may be covered, so that higher generalization capability and accuracy are achieved.

The above example describes a finger pressing state detection method based on a neural network model, which is provided by the example of the present disclosure, when the above method is realized, training is needed to obtain the corresponding neural network model, and the neural network model training method provided by the example of the present disclosure is described below.

In an example, a neural network model training method is provided, and includes:
S01: obtaining trained sample date, where the trained sample date includes finger pressing state sample data and a pressing state classification label corresponding to the finger pressing state sample data, the finger pressing state sample data is constructed on the basis of an ultrasonic echo sample signal, and the ultrasonic echo sample signal is an ultrasonic reflected signal after an ultrasonic sample signal is emitted to a pressing area;
S02: training a neural network model on the basis of the trained sample date until a neural network model that meets preset model conditions is obtained; and
in the example, a model architecture of the neural network model needs to be constructed and sample data needs to be trained at first, where the trained sample date includes finger pressing state sample data and a pressing state classification label corresponding to the finger pressing state sample data, the finger pressing state sample data is constructed on the basis of an ultrasonic echo sample signal, and the ultrasonic echo sample signal is an ultrasonic reflected signal after an ultrasonic sample signal is emitted to a pressing area; and then the neural network model is trained on the basis of the trained sample date until the neural network model that meets preset model conditions is obtained, where the trained neural network model is used for outputting a finger pressing state.

It should be understood that, as an example, parameters of the neural network model are obtained through carrying out supervised learning on a large amount of trained sample date, the model parameters of the neural network model are obtained through training a previously-constructed finger pressing state dataset covering a plurality of scenes and a plurality of temperatures, and information obtained in each scene has a classification label for pressing. During specific training, parameter values for minimizing a loss function may be solved through a stochastic gradient descent method, and the parameters are updated through chain-rule back-propagation until the optimal model parameters are obtained, where the model parameters include a model weight coefficient, and preset model conditions at least include the optimal conditions for the above model parameters.

It needs to be noted that, according to application needs, the needed neural network model may be trained in a targeted manner to match input data during applications, and in an example, the above neural network model includes but is not limited to a neural network model based on a recurrent neural network or a neural network model based on a convolutional neural network.

Further, the neural network model includes a first classification decision layer and a multi-layer recurrent neural network, where output of the multi-layer recurrent neural network is connected with the first classification decision layer;
or,
the neural network model includes a second classification decision layer and a single-layer recurrent neural network, where output of the single-layer recurrent neural network is connected with the second classification decision layer.

The above description may be correspondingly referred to for a specific content of the model architecture, which is not be repeated herein.

It needs to be noted that, on the basis of the above space-domain multi-point detection solution and time-sequence detection solution, during the model training, corresponding training data needs to be constructed in a targeted manner for targeted application, which will be respectively described below.

In an example, the finger pressing state sample data includes a first sample data vector; and the first sample data vector is obtained through converting space-domain sampling sample data, and the space-domain sampling sample data is obtained after carrying out space-domain multi-point sampling on the basis of a single-frame ultrasonic echo sample signal.

In an example, the space-domain sampling sample data is obtained after carrying out space-domain sampling on the single-frame ultrasonic echo sample signal at a preset interval.

In an example, the first sample data vector is a sample data vector subjected to normalization processing.

In the example, in response to the space-domain multi-point detection solution, the neural network model needed for the space-domain multi-point detection solution may be trained in a targeted manner, the related descriptions of the above example may be referred to for more related contents, and a difference includes that the model input data at this moment is the trained sample date.

In an example, the finger pressing state sample data includes a second sample data vector; and
the second sample data vector is obtained through converting echo intensity feature values respectively corresponding to a plurality of single-frame ultrasonic echo sample signals, and the plurality of single-frame ultrasonic echo sample signals respectively are single-frame ultrasonic echo sample signals corresponding to a plurality of different time steps.

In an example, the echo intensity feature value includes an echo intensity mean value of the single-frame ultrasonic echo signal, or the echo intensity feature value includes the minimum echo intensity value in the single-frame ultrasonic echo signal.

In an example, the plurality of different time steps are continuous time steps.

In an example, the second sample data vector is a sample data vector subjected to normalization processing.

In the example, in response to the time-sequence detection solution, the neural network model needed for the time-sequence detection solution may be trained in a targeted manner, the related descriptions of the above example may be referred to for more related contents, and a difference includes that the model input data at this moment is the trained sample date.

It needs to be noted that, according to detection needs, an algorithm of the classification decision layer in the neural network model, such as binary classification or ternary classification or other multi-classifications, as well as a specific classification type of each classification, may be set. During the construction for the sample data, a corresponding classification label is set according to the algorithm of the classification decision layer, so that the trained neural network model outputs the corresponding classification state.

In an example, the finger pressing state output by the neural network model includes: a classification determined state or a classification undetermined state, where the classification determined state is any one of at least two types of pressing states.

In an example, the at least two types of pressing states include a finger touch state and a finger non-touch state; or, the at least two types of pressing states include a finger touch state, a finger non-touch state, a touch-to-non-touch critical state, and a non-touch-to-touch critical state.

It should be understood that, serial numbers of the step in the above example do not imply execution orders, and the execution orders for the processes should be determined by functions and internal logics thereof, and should not constitute any limitation on the implementation process of the example of the present disclosure.

A part of the contents of the method provided by the example of the present disclosure is mainly described above, and the related examples of an apparatus, a medium, a device, etc. which are provided by the example of the present disclosure will be described later.

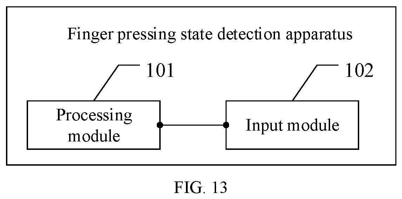

In an example, a finger pressing state detection apparatus is provided, and in one-to-one correspondence with the finger pressing state detection method in the above example. As shown in FIG. 13, the finger pressing state detection apparatus includes a processing module 101 and an input module 102. Detailed description for function modules is as follows:

the processing module 101 is used for pre-processing an ultrasonic echo signal to obtain model input data, where the ultrasonic echo signal is a corresponding ultrasonic echo signal after an ultrasonic array emits an ultrasonic signal to a pressing area; and

the input module 102 is used for inputting the model input data into a trained neural network model, so that the neural network model outputs a finger pressing state.

In conjunction with the previous example, in an example, the neural network model includes a neural network model constructed on the basis of a recurrent neural network; or a neural network model constructed on the basis of a convolutional neural network.

In conjunction with the previous example, in an example:
the neural network model includes a first classification decision layer and a multi-layer recurrent neural network, where output of the multi-layer recurrent neural network is connected with the first classification decision layer;
or,

the neural network model includes a second classification decision layer and a single-layer recurrent neural network, where output of the single-layer recurrent neural network is connected with the second classification decision layer.

In an example, the processing module 101 is used for:
carrying out space-domain multi-point sampling on the single-frame ultrasonic echo signal to obtain space-domain sampled data corresponding to the single-frame ultrasonic echo signal;
converting the space-domain sampled data into a first data vector; and
obtaining model input data of the neural network model according to the first data vector.

In an example, the processing module 101 is used for:
respectively carrying out space-domain sampling on the single-frame ultrasonic echo signal according to a preset row interval and a preset column interval to obtain space-domain sampled data corresponding to the single-frame ultrasonic echo signal.

In an example, the processing module 101 is used for:
carrying out normalization processing on the first data vector, where the first data vector subjected to the normalization processing is model input data of the neural network model.

In an example, the processing module 101 is used for:
converting an echo intensity feature value of the single-frame ultrasonic echo signal acquired at a current time step, and echo intensity feature values respectively corresponding to other time steps into a second data vector, where the other time steps are time steps before the current time step; and
obtaining model input data of the neural network model according to the second data vector.

In an example, the echo intensity feature value includes an echo intensity mean value of the single-frame ultrasonic echo signal, or the echo intensity feature value includes the minimum echo intensity value in the single-frame ultrasonic echo signal.

In an example, the other time steps are the first N-1 continuous time steps of the current time step N.

In an example, the processing module 101 is used for:
carrying out normalization processing on the second data vector, where the second data vector subjected to the normalization processing is model input data of the neural network model.

In an example, the finger pressing state output by the neural network model includes: a classification determined state or a classification undetermined state, where the classification determined state is any one of at least two types of pressing states.

In an example: the at least two types of pressing states include a finger touch state and a finger non-touch state; or, the at least two types of pressing states include a finger touch state, a finger non-touch state, a touch-to-non-touch critical state, and a non-touch-to-touch critical state.

In an example, the processing module 101 is further used for:
when the output finger pressing state is the classification determined state, taking the classification determined state as a final finger pressing state, and correspondingly updating the output classification determined state to a state memory sequence according to a time sequence; and
when the output finger pressing state is the classification undetermined state, taking a pressing state which is finally recorded in the state memory sequence as a final finger pressing state, or taking a pressing state with the highest state probability in the state memory sequence as the finally-output finger pressing state, and correspondingly updating the pressing state to the state memory sequence.

In conclusion, the example of the present disclosure provides a finger pressing state detection apparatus based on a neural network model, and technical effects brought include: a manner of setting a benchmark threshold value to compare is not needed, so that differences among different ultrasonic modules may be eliminated; and the same network model parameter has higher generalization capability among the different ultrasonic modules, moreover, differences in various different scenes (temperatures, frequencies, etc.) and different finger states may be effectively eliminated, and a plurality of special scenes such as a high temperature, a low temperature and finger wetting may be covered, so that higher generalization capability and accuracy are achieved; and the corresponding descriptions of the above method example may be correspondingly referred to for more technical effects.

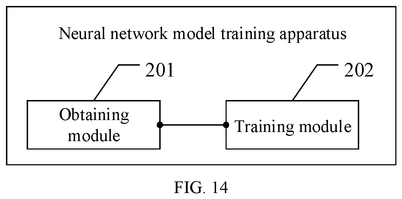

In an example, a neural network model training apparatus is provided, and in one-to-one correspondence with the neural network model training method in the above example. As shown in FIG. 14, the neural network model training apparatus includes an obtaining module 201 and a training module 202. Detailed description for function modules is as follows:

The obtaining module 201 is used for obtaining trained sample date, where the trained sample date includes finger pressing state sample data and a pressing state classification label corresponding to the finger pressing state sample data, the finger pressing state sample data is constructed on the basis of an ultrasonic echo sample signal, and the ultrasonic echo sample signal is an ultrasonic reflected signal after an ultrasonic sample signal is emitted to a pressing area; and
the training module 202 is used for training a neural network model on the basis of the trained sample date until the neural network model that meets preset model conditions is obtained, where the trained neural network model is used for outputting a finger pressing state.

In conjunction with the previous example, in an example, the neural network model includes a neural network model constructed on the basis of a recurrent neural network; or a neural network model constructed on the basis of a convolutional neural network.

In conjunction with the previous example, in an example, the neural network model includes a first classification decision layer and a multi-layer recurrent neural network, where output of the multi-layer recurrent neural network is connected with the first classification decision layer;
or,
the neural network model includes a second classification decision layer and a single-layer recurrent neural network, where output of the single-layer recurrent neural network is connected with the second classification decision layer.

In an example, the finger pressing state sample data includes a first sample data vector; and

the first sample data vector is obtained through converting space-domain sampling sample data, and the space-domain sampling sample data is obtained through carrying out space-domain multi-point sampling on the basis of a single-frame ultrasonic echo sample signal.

In an example, the space-domain sampling sample data is obtained after carrying out space-domain sampling on the single-frame ultrasonic echo sample signal at a preset interval.

In an example, the first sample data vector is a sample data vector subjected to normalization processing.

In an example, the finger pressing state sample data includes a second sample data vector; and
the second sample data vector is obtained through converting echo intensity feature values respectively corresponding to a plurality of single-frame ultrasonic echo sample signals, and the plurality of single-frame ultrasonic echo sample signals respectively are single-frame ultrasonic echo sample signals corresponding to a plurality of different time steps.

In an example, the plurality of different time steps are continuous time steps.

In an example, the second sample data vector is a sample data vector subjected to normalization processing.

In an example, the echo intensity feature value includes an echo intensity mean value of the single-frame ultrasonic echo signal, or the echo intensity feature value includes the minimum echo intensity value in the single-frame ultrasonic echo signal.

In an example, the finger pressing state output by the neural network model includes: a classification determined state or a classification undetermined state, where the classification determined state is any one of at least two types of pressing states.

In an example, the at least two types of pressing states include a finger touch state and a finger non-touch state; or, the at least two types of pressing states include a finger touch state, a finger non-touch state, a touch-to-non-touch critical state, and a non-touch-to-touch critical state.

Related limitations on the method in the above may be referred to for specific limitations related to the above apparatus, which will not be repeated herein. Modules in the above apparatus may be completely or partially realized through software, hardware, and a combination thereof. The above modules may be embedded into or independent of a processor in an electronic device or a computer device in a form of hardware, or may be stored in a memory of the computer device in a form of software, so that the processor is facilitated to call and execute operations corresponding to the above modules.

In an example, an electronic device is provided, and includes a memory, a processor, and a computer program stored in the memory and capable of being run in the processor, where when the processor executes the computer program, the steps of the neural network model training method described in any one of the above contents are realized.

In an example, an electronic device is provided, and includes a memory, a processor, and a computer program stored in the memory and capable of being run in the processor, where when the processor executes the computer program, the steps of the finger pressing state detection method described in any one of the above contents are realized.

Specifically, in an example, as shown in FIG. 1, an electronic device is provided, and includes an ultrasonic piezoelectric sensor, an analog-to-digital converter, a data processing center, and a central controller, where the ultrasonic piezoelectric sensor, the analog-to-digital converter, and the data processing center are all connected with the central controller;
the ultrasonic piezoelectric sensor is used for responding to the central controller to emit an ultrasonic signal to a pressing area, and receiving an ultrasonic echo signal;
the analog-to-digital converter is used for responding to the central controller to carry out digital-to-analog conversion on the ultrasonic echo signal; and
the data processing center responds to the central controller to realize the steps of the above finger pressing state detection method.

In an example, a readable storage medium is provided, and stores a computer program, where when the computer program is executed by a processor, the steps of the above neural network model training method or finger pressing state detection method are realized.

In an example, a computer program product is provided, and includes a computer program, where when the computer program is executed by a processor, the steps of the above neural network model training method or finger pressing state detection method are realized.

Those of ordinary skill in the art may understand that realization for all or a part of the flows in the above example method may be completed by instructing relevant hardware through a computer program, the computer program may be stored in a non-volatile computer-readable storage medium, and while being executed, the computer program may include the flows of the examples of the above methods. Any reference to the memory, the storage, the database, or other media which are used in the examples provided in the present disclosure may include a non-volatile memory and/or a volatile memory.

Those skilled in the art may clearly understand that, for the convenience and simplicity of description, only the division for the above function units and modules is taken as an example for description, and in practical applications, the above functions may be assigned to be completed by different function units and modules as needed, that is, an internal structure of the apparatus is divided into different function units or modules to complete all or a part of the functions described above.

The above examples are merely used for describing the technical solutions of the present disclosure and are not for limitation; although the present disclosure is described in detail with reference to the above examples, those of ordinary skill in the art should understand that: the technical solutions recorded by the above examples may still be modified, or a part of the technical features may be equivalently substituted; and these modifications or substitutions do not depart the essence of the corresponding technical solutions from the spirit and scope of the technical solutions of the examples of the present disclosure, and should be included within the protection scope of the present disclosure.

## Claims

1. A finger pressing state detection method, comprising:
pre-processing an ultrasonic echo signal to obtain model input data, where the ultrasonic echo signal is a corresponding ultrasonic echo signal after an ultrasonic array emits an ultrasonic signal to a pressing area; and
inputting the model input data into a trained neural network model, so that the neural network model outputs a finger pressing state.

2. The finger pressing state detection method according to claim 1, wherein:
the neural network model includes a first classification decision layer and a multi-layer recurrent neural network, where output of the multi-layer recurrent neural network is connected with the first classification decision layer; or
the neural network model includes a second classification decision layer and a single-layer recurrent neural network, where output of the single-layer recurrent neural network is connected with the second classification decision layer.

3. The finger pressing state detection method according to claim 1, wherein the pre-processing an ultrasonic echo signal to obtain model input data comprises:
carrying out space-domain multi-point sampling on the single-frame ultrasonic echo signal to obtain space-domain sampled data corresponding to the single-frame ultrasonic echo signal, converting the space-domain sampled data into a first data vector, and then obtaining model input data of the neural network model according to the first data vector; or
converting an echo intensity feature value of the single-frame ultrasonic echo signal acquired at a current time step, and echo intensity feature values respectively corresponding to other time steps into a second data vector, and then obtaining model input data of the neural network model according to the second data vector, where the other time steps are time steps before the current time step.

4. The finger pressing state detection method according to claim 3, wherein the carrying out space-domain sampling on the single-frame ultrasonic echo signal to obtain space-domain sampled data corresponding to the single-frame ultrasonic echo signal comprises:
carrying out space-domain sampling on the single-frame ultrasonic echo signal according to a preset row interval and a preset column interval to obtain space-domain sampled data corresponding to the single-frame ultrasonic echo signal.

5. The finger pressing state detection method according to claim 3, wherein the other time steps are the first N-1 continuous time steps of the current time step N.

6. The finger pressing state detection method according to claim 3, wherein the echo intensity feature value comprises an echo intensity mean value of the single-frame ultrasonic echo signal, or the echo intensity feature value includes the minimum echo intensity value in the single-frame ultrasonic echo signal.

7. The finger pressing state detection method according to any one of claims 1 to 6, wherein the finger pressing state output by the neural network model includes: a classification determined state or a classification undetermined state, wherein the classification determined state is any one of at least two types of pressing states.

8. The finger pressing state detection method according to claim 7, wherein:
the at least two types of pressing states include a finger touch state and a finger non-touch state; or
the at least two types of pressing states include a finger touch state, a finger non-touch state, a touch-to-non-touch critical state, and a non-touch-to-touch critical state.

9. The finger pressing state detection method according to claim 7, wherein after the inputting the model input data into a trained neural network model, so that the neural network model outputs a finger pressing state, the method further comprises:
when the output finger pressing state is the classification determined state, taking the classification determined state as a final finger pressing state, and correspondingly updating the output classification determined state to a state memory sequence according to a time sequence; and
when the output finger pressing state is the classification undetermined state, taking a pressing state which is finally recorded in the state memory sequence as a final finger pressing state, or taking a pressing state with the highest state probability in the state memory sequence as the finally-output finger pressing state, and correspondingly updating the pressing state to the state memory sequence.

10. A neural network model training method, comprising:
obtaining trained sample date, where the trained sample date comprises finger pressing state sample data and a pressing state classification label corresponding to the finger pressing state sample data, the finger pressing state sample data is constructed on the basis of an ultrasonic echo sample signal, and the ultrasonic echo sample signal is an ultrasonic reflected signal after an ultrasonic sample signal is emitted to a pressing area;
training a neural network model on the basis of the trained sample date until a neural network model that meets preset model conditions is obtained; and
using the trained neural network model for outputting a finger pressing state.

11. The neural network model training method according to claim 10, wherein:
the neural network model includes a first classification decision layer and a multi-layer recurrent neural network, where output of the multi-layer recurrent neural network is connected with the first classification decision layer; or
the neural network model includes a second classification decision layer and a single-layer recurrent neural network, where output of the single-layer recurrent neural network is connected with the second classification decision layer.

12. The neural network model training method according to claim 10, wherein the finger pressing state sample data includes a first sample data vector, the first sample data vector is obtained through converting space-domain sampling sample data, and the space-domain sampling sample data is obtained through carrying out space-domain multi-point sampling on the basis of a single-frame ultrasonic echo sample signal; or
the finger pressing state sample data comprises a second sample data vector, the second sample data vector is obtained through converting echo intensity feature values respectively corresponding to a plurality of single-frame ultrasonic echo sample signals, and the plurality of single-frame ultrasonic echo sample signals respectively are single-frame ultrasonic echo sample signals corresponding to a plurality of different time steps.

13. The neural network model training method according to claim 12, wherein the space-domain sampling sample data is obtained after carrying out space-domain sampling on the single-frame ultrasonic echo sample signal at a preset interval.

14. The neural network model training method according to claim 12, wherein the plurality of different time steps are continuous time steps.

15. The neural network model training method according to claim 12, wherein the echo intensity feature value comprises an echo intensity mean value of the single-frame ultrasonic echo signal, or the echo intensity feature value comprises the minimum echo intensity value in the single-frame ultrasonic echo signal.

16. The neural network model training method according to any one of claims 10 to 15, wherein the finger pressing state output by the neural network model comprises: a classification determined state or a classification undetermined state, wherein the classification determined state is any one of at least two types of pressing states.

17. The neural network model training method according to claim 16, wherein:
the at least two types of pressing states include a finger touch state and a finger non-touch state; or
the at least two types of pressing states include a finger touch state, a finger non-touch state, a touch-to-non-touch critical state, and a non-touch-to-touch critical state.

18. An electronic device, comprising an ultrasonic piezoelectric sensor, an analog-to-digital converter, a data processing center, and a central controller, wherein the ultrasonic piezoelectric sensor array, the analog-to-digital converter, and the data processing center are all connected with the central controller;
the ultrasonic piezoelectric sensor is used for responding to the central controller to emit an ultrasonic signal to a pressing area, and receiving an ultrasonic echo signal;
the analog-to-digital converter is used for responding to the central controller to carry out digital-to-analog conversion on the ultrasonic echo signal; and
the data processing center responds to the central controller to realize the steps of the finger pressing state detection method according to any one of claims 1 to 9.

19. An electronic device, comprising a memory, a processor, and a computer program stored in the memory and capable of being run in the processor, wherein when the processor executes the computer program, the steps of the neural network model training method according to any one of claims 10 to 17 are realized.

20. A readable storage medium, storing a computer program, wherein when the computer program is executed by a processor, the steps of the method according to any one of claims 1 to 17 are realized.
